# EUROPÄISCHE PATENTSCHRIFT

(11) **EP 0 463 397 B1**
(45) Veröffentlichungstag und Bekanntmachung des Hinweises auf die Patenterteilung: **09.11.1994**
(21) Anmeldenummer: 91108912.6
(22) Anmeldetag: 31.05.1991
(51) Int. Cl.: A01B 69/02, A01C 7/08

(54) **Sämaschine**
Seeder
Semoir

(30) Priorität: 26.06.1990 DE 4020232
(43) Veröffentlichungstag der Anmeldung: 02.01.1992
(73) Patentinhaber: Amazonen-Werke H. Dreyer GmbH & Co. KG, D-49205 Hasbergen (DE)
(72) Erfinder: Friedhard,Johannes, W-2875 Ganderkesee 1 (DE)

(56) Entgegenhaltungen:
- EP-A- 0 176 023
- EP-A- 0 193 804
- FR-A- 2 584 260
- US-A- 3 949 686
- US-A- 4 023 707

## Beschreibung

Die Erfindung betrifft eine Sämaschine gemäß Oberbegriff des Patentanspruches 1.

Derartig ausgebildete Sämaschinen sind in der landwirtschaftlichen Praxis seit langem bekannt. Die als sog. Fahrgassen ausgebildeten Markierungsstreifen haben den großen und unverzichtbaren Vorteil, daß Sie als Führungsbahnen für nachfolgende Pflanzenschutz- und Düngemaßnahmen dienen und auf einfache Weise eine exakte Ausbringung von Pflanzenschutz- und Düngemitteln ermöglichen und die unerwünschten und gefährlichen Über- oder Unterdosierungen der auszubringenden Mittel vermieden werden.

In stark hügeligen Getreideanbaugebieten kann es durch diese saatgutfreien Markierungsstreifen, den Fahrgassen, zu Bodenerosionen durch Niederschläge und Schmelzwasser kommen. Das ablaufende Wasser kann diese als Fahrspuren dienenden Fahrgassen unterschiedlich tief auswaschen, d. h., das Wasser schwemmt die Erde aus den Fahrgassen fort. Diese unterschiedlich tief ausgewaschenen Fahrspuren machen einen korrekten Einsatz der für die nachfolgenden Pflanzenschutz- und Düngemaßnahmen eingesetzten Maschinen und Geräte fast unmöglich.

Der Erfindung liegt nun die Aufgabe zugrunde, auf einfache Weise eine Befestigung der Fahrgassenstreifen zu erreichen, um die Gefahr der Wassererosion in den Fahrgassen zu reduzieren, wobei gleichzeitig eine deutliche Markierung dieser Fahrstreifen gewährleistet ist.

Diese Aufgabe wird in erfindungsgemäßer Weise durch das kennzeichende Merkmal des Anspruches 1 gelöst.

Infolge dieser Maßnahme ist es möglich, die Fahrgassenschaltung z. B. während der Arbeit von Normalbetrieb auf Intervallschaltung zu verändern. Im Normalbetrieb werden beim Anlegen der Fahrgassen vollkommen saatgutfreie Markierungsstreifen erzeugt, wobei bei der Arbeit im hügeligen Gelände auf Intervallschaltung umgeschaltet werden kann, so daß beim Anlegen der Fahrgasse diese in einem einstellbaren Rhythmus unterbrochen wird, d. h., daß die Fahrgasse abwechselnd aus besäten und saatgutfreien Abschnitten besteht. Dieses teilweise Besäen der Fahrgassen wirkt in einfacher Weise den bei heftigen Niederschlägen verursachten Bodenerosionen entgegen, wobei gleichzeitig eine deutliche Markierung der Fahrgassen durch die saatgutfreien Abschnitte erreicht wird.

Durch europäische Patentschrift 0 193 804 ist ein Verfahren für die Aussaat von Nutzpflanzensaatgut bekannt, wobei die für nachfolgende Pflanzenschutz- und Düngemaßnahmen dienenden Markierungsstreifen mit einem anderen Saatgut, welches nicht Nutzpflanzensaatgut ist, besät werden. Hierzu ist an der Sämaschine eine zusätzliche Sävorrichtung angeordnet, die den in den von Nutzpflanzensaatgut freizuhaltenden Markierungsstreifen angeordneten Säelementen beim Anlegen der Markierungsstreifen ein anderes Saatgut zuführen, welches unter anderem zum Befestigen der Markierungsstreifen dient. Das Ausbringen von anderen Saatgütern in den sog. Fahrgassen läßt sich nur durch eine zusätzliche Sävorrichtung realisieren. Diese zusätzliche Sävorrichtung bedeutet einen technischen Mehraufwand, wodurch sich die Anschaffungskosten für eine zur Durchführung dieses Verfahrens benötigten Sämaschine erhohen. Die zur Lösung der gestellten Aufgabe in erfindungsgemäßer Weise ausgerüstete Sämaschine stellt eine alternative, preisgünstigere Lösung zur Herstellung von weniger wassererosionsgefährdeten Markierungsstreifen gegenüber den bekannten Stand der Technik dar.

Desweiteren ist durch die US-PS 40 23 707 eine Sävorrichtung bekannt, die ebenfalls zur Erzeugung von Markierungsstreifen für nachfolgende Pflanzenschutz- und Düngemaßnahmen ausgebildet ist. Hierbei wird den in den herzustellenden Markierungsstreifen angeordneten Säelementen in der Weise Saatgut zuführt, daß Stellen hoher Pflanzengutdichte sich mit Stellen geringerer oder überhaupt keiner Pflanzendichte abwechseln. Innerhalb der zu erzeugenden Markierungsstreifen werden den in diesem Bereich angeordneten Säelementen also unterschiedliche Ausbringmengen zugeführt, was zur Erzeugung von Abschnitten mit unterschiedlicher Pflanzengutdichte führt. Dadurch, daß die Reihen unterschiedlich dicht besät werden, so daß dann in der Reihe, die zu Markierungszwecken dient, Stellen hoher Pflanzengutdichte sich mit Stellen geringerer oder überhaupt keiner Pflanzengutdichte abwechseln, ist ebenfalls nur durch einen technischen Mehraufwand möglich.

Weiterhin ist zur Lösung der erfindungsgemäßen Aufgabe vorgesehen, daß die Schaltvorrichtung neben der periodischen Schaltung zusätzlich eine Intervallschaltung zum Betätigen der Saatgutzufuhrunterbrechungselemente beim Anlegen der Markierungsstreifen aufweist. Infolge dieser Maßnahme wird die Saatgutzufuhr beim Anlegen der Markierungsstreifen zu den bestimmten, in diesen Markierungsstreifen angeordneten Säelementen intervallweise unterbrochen. Die zu erzeugenden Markierungsstreifen bestehen also aus einer Aneinanderreihung von saatgutfreien und besäten Abschnitten, wobei die Aussaatstärke der in den Markierungsstreifen angeordneten Säelemente unverändert gegenüber den übrigen Säelementen der Sämaschine bleibt. Dadurch, daß sich saatgutfreie mit besäten Abschnitten innerhalb der Markierungsstreifen aneinanderreihen, wird eine deutliche Markierung der Fahrgassen gewährleistet und gleichzeitig die Gefahr der Wassererosionen in den Fahrgassen erheblich reduziert.

Desweiteren ist erfindungsgemäß vorgesehen, daß die Schaltvorrichtung elektronisch ausgebildet ist. Hierbei ist weiterhin vorgesehen, daß die Intervallzeiten auf verschieden lange Zeiten einstellbar sind. Hierdurch lassen sich auf einfachste Weise die Längen der sich aneinanderreihenden saatgutfreien und besäten Abschnitte jeweils exakt einstellen. Somit bietet die Intervallschaltung die Möglichkeit, beim Anlegen der als Fahrgassen ausgebildeten Markierungsstreifen die Fahrgassenschaltung in einem einstellbaren Rhytmus zu unterbrechen. Durch das Einstellen der verschiedenen Intervallzeiten ist es möglich, die jeweiligen Einsatzverhältnisse wie z. B. Standort, Fahrgeschwindigkeit usw. zu berücksichtigen.

Damit bereits vor dem Auflaufen des ausgesäten Getreides die Pflanzenschutz- und Düngemaßnahmen exakt durchgeführt werden können, sind die Sämaschinen teilweise mit einer sog. Vorauflaufmarkierungseinrichtung ausgerüstet. Diese Vorauflaufmarkierungseinrichtungen sind hinter der Sämaschine angeordnet, und in den meisten Fällen als zur Fahrtrichtung schräg angestellte Scheiben ausgebildet, so daß sie in den saatgutfreien Markierungsstreifen eine deutlich sichtbare Spur markieren, die dem Schlepperfahrer dann bei noch nicht aufgelaufenen Getreidepflanzen als Orientierungshilfe dienen. Bei mit einer Vorauflaufmarkierung ausgerüsteten Sämaschine ist dann in besonders bevorzugter Weise erfindungsgemäß vorgesehen, daß die Schaltvorrichtung neben der periodischen Schaltung zusätzlich eine Intervallschaltung zur wahlweisen Betätigung der Saatgutzufuhrunterbrechungselemente und der Vorauflaufmarkierung beim Anlegen der Markierungsstreifen aufweist. Hierbei ist dann weiterhin erfindungsgemäß vorgesehen, daß die Vorauflaufmarkierung in den saatgutfreien Abschnitten der Markierungsstreifen, wenn die Saatgutzufuhrunterbrechungselemente die Saatgutzufuhr zu den bestimmten, in den Markierungsstreifen angeordneten Säelementen unterbrechen, absenkt und in den besäten Abschnitten der Markierungsstreifen angehoben werden. Hierdurch wird also bei der intervallweisen Aussaat zur Kennzeichnung der Markierungsstreifen in besonders bevorzugter Weise auch eine Möglichkeit zur Kennzeichnung der Markierungsstreifen bei noch nicht aufgelaufenem Getreidebestand für die Durchführung von Pflanzenschutz- und Düngemaßnahmen geschaffen, so daß sich diese Arbeiten in gewünschter Weise durchführen lassen und die unerwünschten und gefährlichen Überlappungen durch Über- und Unterdosierungen der auszubringenden Pflanzenschutz- bzw. Düngemittel verhindert werden.

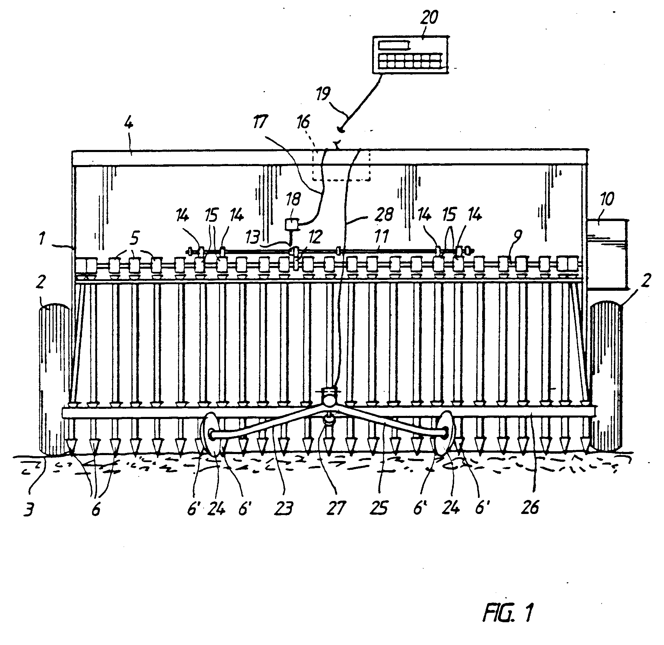

Weitere Einzelheiten der Erfindung sind der Beispielsbeschreibung und den Zeichnungen zu entnehmen. Hierbei zeigt
- Fig. 1: eine in erfindungsgemäßer Weise ausgerüstete Sämaschine in der Ansicht von hinten,
- Fig. 2: ein mit der in erfindungsgemäßer Weise ausgerüsten Sämaschine angelegtes Feld in Prinzipdarstellung und in der Draufsicht und
- Fig. 3: einen Ausschnitt des von der erfindungsgemäß ausgerüsteten Sämaschine angelegten Feldes in der Draufsicht und in vergrößertem Maßstab.

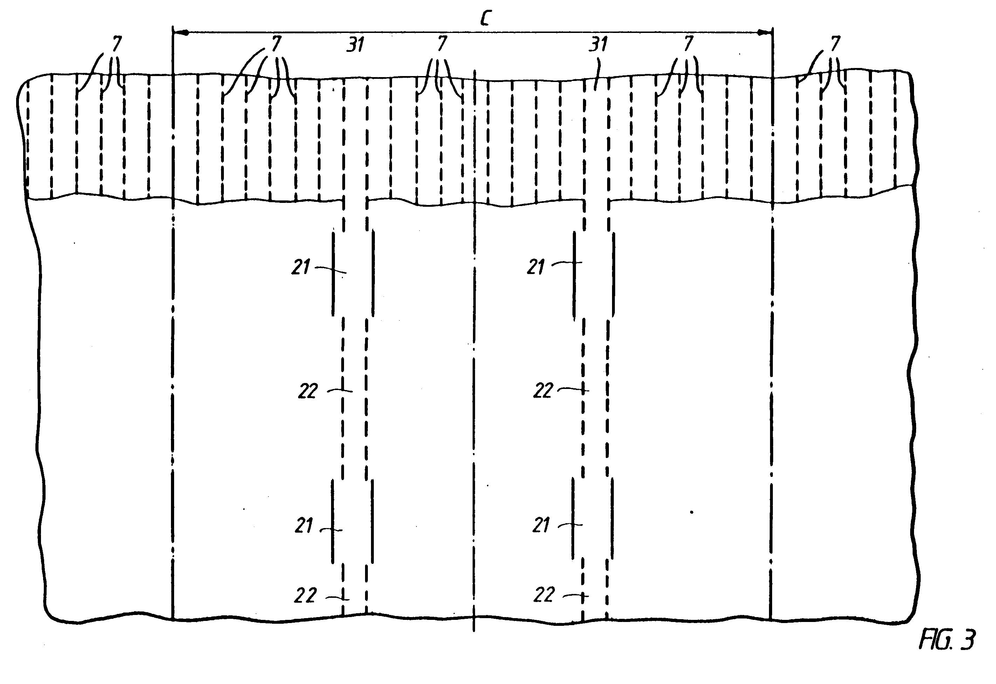

Die Sämaschine wird über bekannte und daher nicht näher dargestellte Kupplungselemente an den Dreipunktkraftheber eines Ackerschleppers angekuppelt. Die Sämaschine weist den Rahmen 1 auf, der sich in abgesenkter Betriebsstellung über die Laufräder 2 auf dem Boden 3 abstützt und an dem der Vorratsbehälter 4 für das auszubringende Saatgut angebracht ist. Das sich im Vorratsbehälter 4 befindliche Saatgut wird mittels der Dosierorgane 5 über die Säschare 6 in den Boden 3 in nebeneinander angeordneten, in Fig. 3 mit strichpunktierten Linien angedeuteten Reihen 7 abgelegt. Die Dosierorgane 5 sind als Dosierräder ausgebildet, wobei die das Saatgut zu den innerhalb der als Fahrgassen 8 ausgebildeten Markierungsstreifen angeordneten Säschare 6' zuführenden Dosierräder frei drehbar auf der Dosierwelle 9 angeordnet sind. Diese Dosierwelle 9 wird von den Laufrädern 2 über das Regelgetriebe 10 angetrieben. Parallel zu der Dosierwelle 9 ist an dem Vorratsbehälter 4 oberhalb der Dosierräder die Vorgelegewelle 11 gelagert. Die Vorgelegewelle 11 ist, über den Zahnradtrieb 12, der die Schlingfederkupplung 13 aufweist drehmomentübertragbar mit der Dosierwelle 9 verbunden. Weiterhin sind auf der Vorgelegewelle 11 die Zahnräder 14 drehfest angeordnet, deren Verzahnung in die Verzahnung der auf der Dosierwelle 9 frei drehbar angeordneten Dosierräder 15 eingreifen. Somit werden die Dosierräder 15 über die Vorgelegewelle 11 angetrieben, wenn die Schlingfederkupplung 13 eingeschaltet ist.

Weiterhin ist an der Vorderseite der Sämaschine die Schaltvorrichtung 16 befestigt, die mittels des Kabels 17 mit dem als Hubmagnet 18 ausgebildeten Schaltelement verbunden ist. Mittels des Hubmagneten 18 erfolgt die Betätigung der Schlingfederkupplung 13. Die Schaltvorrichtung 16 weist ein Zählvorrichtung auf, die jeweils beim Wenden der Sämaschine am Feldende weiterzählt. Die Zählvorrichtung der Schaltvorrichtung 16 ist beim Ausführungsbeispiel so ausgelegt bzw. über die auf dem Schlepper angeordnete und mittels des Kabels 19 mit der Schaltvorrichtung verbundenen Fernbedienungselementes 20 programmiert, daß sie bei jeder 3. Feldüberfahrt Impulse an die Schaltvorrichtung 16 übermittelt, so daß durch Ein- bzw. Ausschalten der Schlingfederkupplung 13 eine Fahrgasse 8 angelegt bzw. nicht angelegt wird. Somit wird die Saatgutzufuhr zu den Säscharen 6' über die Schaltvorrichtung 16, die den Hubmagneten 18 betätigt, in periodischer Wiederkehr unterbrochen. Diese Schaltvorrichtung 16 ist derart ausgebildet, daß sie neben der Betätigung des Hubmagneten 18 zum Anlegen der Fahrgassen 8 in periodischer Wiederkehr zusätzlich eine Intervallschaltung zum Betätigen des Hubmagneten 18 beim Anlegen der als Markierungsstreifen dienenden Fahrgassen 8 aufweist. Erfolgt das Ausbringen des Saatgutes beispielsweise auf stark wassererosionsgefährdeten Böden, läßt sich das Anlegen der Fahrgassen derart durchführen, daß den in den Fahrgassen 8 angeordneten Säscharen 6' intervallweise Saatgut zugeführt wird, so daß sich saatgutfreie Abschnitte 21 mit in den Fahrgassen 8 befindlichen besäten Abschnitten 22 aneinanderreihen. Die Länge dieser Abschnitte 21 und 22 lassen sich beim Anlegen der Fahrgassen 8 über die Fernbedienungsvorrichtung 20 vorwählen.

Hinter den Säscharen 6' ist die Fahrgassenmarkierungseinrichtung 23 angeordnet. Die Fahrgassenmarkierungseinrichtung 23 weist z. B. die schräg angestellten Spuranreißerscheiben 24 auf, die drehbar an der Halterung 25 gelagert sind. Zwischen der Halterung 25 und dem Querbalken 26 ist die Hebe- und Senkvorrichtung 27 für die Vorauflaufmarkierungseinrichtung 23 angeordnet. Die Hebe- und Senkeinrichtung 27 ist über die Leitung 28 mit der Schaltvorrichtung 16 verbunden, so daß über die Hebe- und Senkvorrichtung 27 die Spuranreißerscheiben 24 beim Anlegen der Fahrgasse 8, d. h., wenn die Saatgutzufuhr zu den Säscharen 6' unterbrochen ist, in die abgesenkte Position gebracht werden. In dieser abgesenkten Stellung dringen die Spuranreißerscheiben 24 in den Boden 3 ein und markieren durch ihre Schrägstellung und Drehbewegung jeweils eine Spur. Wenn keine Fahrgasse 8 angelegt wird, werden die Spuranreißerscheiben 24 durch die Hebevorrichtung 27 in die angehobene Stellung gebracht. Das Anheben und Absenken der Spuranreißerscheiben 24 erfolgt im Gleichklang mit dem Ein- und Abschalten der Saatgutzufuhr zu den Fahrgassensäscharen 6' mittels des als Saatgutzufuhrunterbrechungselementes ausgebildeten Hubmagneten 18.

Werden nun die Fahrgassen 8 mit sich abwechselnden saatgutfreien und besäten Abschnitten 21 und 22 angelegt, werden die saatgutfreien Abschnitte 21 durch die Vorauflaufmarkierungseinrichtung 23 sichtbar gemacht. Die Vorauflaufmarkierungseinrichtung 23 wird also ständig angehoben und wieder abgesenkt, so daß die Vorauflaufmarkierungseinrichtung 23 in den saatgutfreien Abschnitten 21 der Fahrgassen 8, wenn kein Saatgut von den Dosierrädern 15 zu den Säscharen 6' gelangt, abgesenkt und in den besäten Abschnitten 22 angehoben wird.

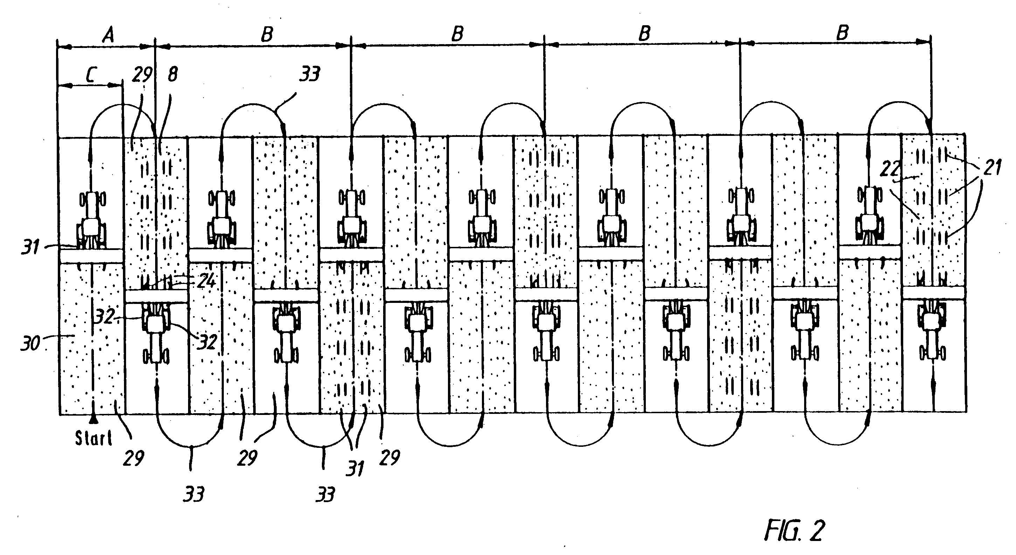

Über das in Fig. 2 dargestellte Feld wird die an dem Schlepper angekuppelte Sämaschine in Hin- und Herfahrt gefahren, wobei die jeweiligen Arbeitsbahnen 29 der Sämaschine einen genauen Anschluß zueinander erhalten. Zur Verdeutlichung sind die mit Saatgut beschickten Flächen 30 des Feldes gepunktet wiedergegeben. Wie klar erkennbar ist, wird bei jeder 3. Arbeitsbahn 29 die Saatgutzufuhr für den Bereich der Spuren 31 der Schlepperräder 32 intervallweise abgeschaltet, so daß sich innerhalb dieser Fahrgassen 8 saatgutfreie Abschnitte 21 mit besäten Abschnitten 22 aneinanderreihen und für das Fahren der Maschinen für nachfolgende Pflanzenschutz- und Düngemaßnahmen benutzt werden können. Damit diese angelegten Fahrgassen 8 schon vor dem Auflaufen des ausgesäten Getreides als Orientierungshilfe genutzt werden können, sind die saatgutfreien Abschnitte 21 mittels der Vorauflaufmarkierungseinrichtung kenntlich gemacht. Die 1. Fahrgasse 8 wird bei der 2. Feldüberfahrt in der 2. Arbeitsbahn 29 im Abstand A vom Feldrand angelegt. Der Abstand A entspricht der halben Arbeitsbreite B der Maschinen für die nachfolgenden Pflanzenschutz- und Düngemaßnahmen. Folglich werden die weiteren Fahrgassen 8 jeweils im Abstand B zueinander angelegt. In dem Ausführungsbeispiel ist die Arbeitsbreite B dreimal so groß wie die Arbeitsbreite C der Sämaschine. Das Ab- und Einschalten der Saatgutzufuhr zu den Säscharen 6' in den Fahrgassen 8 wird hierbei durch Betätigen der Schaltvorrichtung 16 bei dem durch die Pfeile 33 gekennzeichneten Wendevorgang am Feldende bewirkt.

## Patentansprüche

1. Sämaschine mit einem Vorratsbehälter und Dosierorganen, die das sich im Vorratsbehälter befindliche Saatgut in einstellbaren Mengen Säelementen zuführen, die dieses Saatgut in Reihen in dem Boden ablegen, wobei in periodischer Wiederkehr in Abständen, die ein Vielfaches der Arbeitsbreite der Sämaschine entsprechen, die Saatgutzufuhr zu bestimmten Säelementen durch über eine Schaltvorrichtung zu betätigende Saatgutzufuhrunterbrechungselemente abschaltbar ist, so daß Markierungsstreifen entstehen, die für die Laufräder von Fahrzeugen für nachfolgende Pflanzenschutz- und Düngemaßnahmen zum Befahren vorgesehen sind, dadurch gekennzeichnet, daß beim Anlegen der Markierungsstreifen (8) die Saatgutzufuhrunterbrechungselemente (13, 14, 18) über die Schaltvorrichtung (16) intervallweise laufend betätigt werden und zwar mit derartigen Mitteln, daß die Aussaatstärke der in den Markierungsstreifen angeordneten Säelemente unverändert gegenüber den übrigen Säelemente bleibt.

2. Sämaschine nach Anspruch 1, dadurch gekennzeichnet, daß die Schaltvorrichtung (16) neben der periodischen Schaltung zusätzlich eine Intervallschaltung zum Betätigen der Saatgutzufuhrunterbrechungselemente (13, 14, 18) beim Anlegen der Markierungsstreifen (8) aufweist.

3. Sämaschine nach einem oder mehreren der vorstehenden Ansprüche, dadurch gekennzeichnet, daß die Schaltvorrichtung (16) elektronisch ausgebildet ist.

4. Sämaschine nach einem oder mehreren der vorstehenden Ansprüche, dadurch gekennzeichnet, daß die Intervallzeiten auf verschieden lange Zeiten einstellbar sind.

5. Sämaschine nach einem oder mehreren der vorstehenden Ansprüche, wobei die Sämaschine mit einer Vorauflaufmarkierungseinrichtung ausgerüstet ist, die mit der Schaltvorrichtung zum Betätigen der Saatgutzzufuhrunterbrechungselemente gekoppelt ist, dadurch gekennzeichnet, daß die Schaltvorrichtung (16) neben der periodischen Schaltung zusätzlich eine Intervallschaltung zur wahlweisen Betätigung der Saatgutzufuhrunterbrechungselemente (13, 14, 18) und der Vorauflaufmarkierungseinrichtung (23) beim Anlegen der Markierungsstreifen (8) aufweist.

6. Sämaschine nach einem oder mehreren der vorstehenden Ansprüche, dadurch gekennzeichnet, daß die Intervallschaltung zusätzlich zur Steuerung der wechselweisen Betätigung der Saatgutzufuhrunterbrechungselemente (13, 14, 18) und der Hebe- und Senkvorrichtung (27) der Vorauflaufmarkierungseinrichtung (23) während des Anlegens von Markierungsstreifen (8) dient, daß die Vorauflaufmarkierungseinrichtung (23) in den saatgutfreien Abschnitten (21) der Markierungsstreifen (8), wenn die Saatgutzufuhrunterbrechungselemente (13, 14, 18) die Saatgutzufuhr zu den bestimmten, in den Markierungsstreifen (8) angeordneten Säelementen (6) unterbrechen, abgesenkt und in den besäten Abschnitten (22) der Markierungsstreifen (8) angehoben werden.

## Claims

1. Seed drill, including a hopper and metering members, which supply the seeds situated in the hopper in adjustable quantities to sowing elements which deposit these seeds in rows in the ground, wherein the supply of seeds to predetermined sowing elements can be discontinued by seed supply interrupting members, which are to be actuated via switching device, in a periodic cycle at intervals which correspond to a multiple of the working width of the seed drill, so that marker strips are produced which are provided for the running wheels of vehicles to travel therealong for subsequent plant protecting and fertilising measures, characterised in that, while the marker strips (8) are being applied, the seed supply interrupting members (13, 14, 18) are consecutively actuated at intervals via the switching device (16), namely by such means that the sowing intensity of the sowing elements disposed in the marker strips remains unchanged compared with the other remaining sowing elements.

2. Seed drill according to claim 1, characterised in that, in addition to the periodic circuit, the switching device (16) has an interval circuit for actuating the seed supply interrupting members (13, 14, 18) during the application of the marker strips (8).

3. Seed drill according to one or more of the preceding claims, characterised in that the switching device (16) is electronic.

4. Seed drill according to one or more of the preceding claims, characterised in that the interval periods are adjustable to periods of different lengths.

5. Seed drill according to one or more of the preceding claims, wherein the seed drill is provided with an advance marking means which is connected to the switching device for actuating the seed supply interrupting members, characterised in that, in addition to the periodic circuit, the switching device (16) additionally has an interval circuit for selectively actuating the seed supply interrupting members (13, 14, 18) and the advance marking means (23) during the application of the marker strips (8).

6. Seed drill according to one or more of the preceding claims, characterised in that the interval circuit additionally serves to control the alternate actuation of the seed supply interrupting members (13, 14, 18) and the raising and lowering device (27) of the advance marking means (23) during the application of marker strips (8), in that the advance marking means (23) is lowered in the seed-free portions (21) of the marker strips (8) when the seed supply interrupting members (13, 14, 18) interrupt the supply of seeds to the predetermined sowing elements (6), which are disposed in the marker strips (8), and said advance marking means is raised in the sown portions (22) of the marker strips (8).

## Revendications

1. Semoir équipé d'un réservoir et d'organes de dosage recevant la semence du réservoir en quantité réglable pour les éléments de semoir qui déposent la semence en rangées dans le sol, et avec une répétition périodique à des intervalles qui correspondent à un multiple de la largeur de travail du semoir, on coupe l'alimentation en semence de certains éléments de semoir par des éléments de coupure d'alimentation en semence actionnés par un dispositif de commutation, pour former des bandes de marquage destinées à être empruntées par les roues des véhicules au cours des passages ultérieurs pour le traitement des plantes, semoir caractérisé en ce que pour réaliser des bandes de marquage 8, on actionne en permanence, par intervalles, les éléments d'interruption d'alimentation de semence (13, 14, 18) par le dispositif de commutation (16), avec des moyens tels que la densité d'ensemencement des éléments de semoir associés aux bandes de marquage reste inchangée par rapport à celle des autres éléments de semoir.

2. Semoir selon la revendication 1, caractérisé en ce que le dispositif de commutation (16) comporte en plus de la commutation périodique une commutation par intervalles pour actionner les éléments d'interruption d'alimentation de semence (13, 14, 18) lors de la réalisation des bandes de marquage (8).

3. Semoir selon l'une ou plusieurs des revendications précédentes, caractérisé en ce que le dispositif de commutation (16) est électronique.

4. Semoir selon l'une ou plusieurs des revendications précédentes, caractérisé en ce que la durée des intervalles se règle à des valeurs différentes.

5. Semoir selon l'une ou plusieurs des revendications précédentes, comprenant un dispositif de prémarquage couplé au dispositif de commutation actionnant les éléments d'interruption d'alimentation de semence, semoir caractérisé en ce que le dispositif de commutation (16) comporte en plus de la commutation périodique, une commutation par intervalles pour actionner sélectivement les éléments d'interruption d'alimentation en semence (13, 14, 18) et le dispositif de prémarquage (23) lors de la réalisation des bandes de marquage (8).

6. Semoir selon l'une ou plusieurs des revendications précédentes, caractérisé en ce que la commutation par intervalles sert en plus de la commande de la manoeuvre alternée des éléments d'interruption d'alimentation de semence (13, 14, 18) et du dispositif de relevage et d'abaissement (27) du dispositif de prémarquage (23) pendant la réalisation des bandes de marquage (8),.le dispositif de prémarquage (23) étant abaissé dans les segments sans semence (21) des bandes de marquage (8), lorsque les éléments d'interruption d'alimentation de semence (13, 14, 18) coupent l'alimentation en semence vers les éléments de semoir (6) déterminés, associés aux bandes de marquage (8) alors que ces dispositifs de prémarquage sont relevés pour les segments ensemencés (22) des bandes de marquage (8).
